# FASCICULE DE BREVET EUROPEEN

(11) **EP 4 124 900 B1**
(45) Date de publication et mention de la délivrance du brevet: **18.06.2025**
(21) Numéro de dépôt: 22185102.5
(22) Date de dépôt: 15.07.2022
(51) Int. Cl.: G02C 5/14, G02C 5/16, G02C 5/22

(54) **BRANCHE D'UNE PAIRE DE LUNETTES**
BÜGEL EINES BRILLENGESTELLS
ARM OF A PAIR OF SPECTACLES

(30) Priorité: 28.07.2021 FR 2108184
(43) Date de publication de la demande: 01.02.2023
(73) Titulaire: Julbo, 39400 Longchaumois (FR)
(72) Inventeur: BEAUD, Adrien, 39400 Longchaumois (FR)
(74) Mandataire: Doucède, Géraldine Aurore Sonia Claire

(56) Documents cités:
- EP-A1- 3 767 372
- WO-A1-2012/116418
- DE-U1- 202013 000 535
- US-A1- 2018 129 069

## Description

### DOMAINE DE L'INVENTION

La présente invention se rapporte au domaine des montures de lunettes. Notamment la présente invention concerne une branche d'une paire de lunette susceptible de se déformer, voire fléchir, dès lors qu'un effort est exercé sur cette dernière.

### ARRIERE PLAN TECHNOLOGIQUE DE L'INVENTION

De manière classique, une paire de lunettes connue de l'état de la technique comprend une monture sur laquelle sont montés des verres assurant une fonction de protection contre le soleil et/ou une fonction corrective de la vue et/ou une fonction de protection (notamment pour le bricolage, dans le domaine industriel ou le domaine médical...). La monture comprend également une face avant ou cadre principal (ci-après « face ») recevant les verres, et sur laquelle sont fixées, en liaison charnière au moyen de charnières, des branches.

Chaque charnière permet notamment, par rotation, de plier (en position fermée) et de déplier (en position ouverte) la branche à laquelle elle est associée.

En position pliée, les branches sont rabattues contre la face de la monture de lunettes de manière à réduire leur encombrement. En position dépliée, les branches sont écartées de la face et s'étendent selon deux axes sensiblement parallèles entre eux et perpendiculaires à un plan défini par la face de la monture de lunettes.

La monture de lunette peut être pourvue de butées de manière à limiter l'écartement relatif des branches lorsqu'elles sont en position dépliée. Toutefois, cette configuration confère à la monture de lunettes une rigidité dommageable dès lors qu'un effort excessif est exercé sur l'une et/ou l'autre des deux branches.

Ainsi, il a pu être proposé, par exemple dans les documents EP3767372A1 et FR 2 786 883, de mettre en œuvre des branches flexibles.

Notamment, ce document décrit une branche de monture de lunettes formée de deux parties dites, respectivement, partie proximale et partie distale, reliées par un élément à effet ressort autorisant un mouvement relatif de la partie distale par rapport à la partie proximale. Plus particulièrement, l'élément à effet ressort autorise une flexion de la branche dès lors qu'un effort est exercé sur cette dernière. Toutefois, cette flexibilité de la branche reste limitée à un effort dans le sens du déploiement de cette dernière.

Un but de la présente invention est donc de proposer une branche de monture de lunettes améliorée au regard de la branche décrite dans le document FR 2 786 883. Plus particulièrement, un but de la présente invention est de proposer une branche dont la flexion n'est pas limitée à un seul degré de liberté.

### BREVE DESCRIPTION DE L'INVENTION

La présente invention concerne une branche destinée à être montée par une de ses faces, dite face de montage, en liaison charnière autour d'un axe charnière, à une monture de lunettes, de manière à pouvoir pivoter entre une position plié et une position dépliée, la branche comprenant:
- un premier tronçon pourvu d'un premier logement débouchant par la face de montage et par une première face du premier tronçon opposée à la face de montage ;
- un deuxième tronçon comprenant une deuxième face par laquelle débouche un deuxième logement, la première et la deuxième faces étant de formes complémentaires de manière à permettre leur emboitement ;
la branche est également pourvue d'un élément charnière fixé au deuxième tronçon dans le deuxième logement et qui traverse le premier logement pour laisser déboucher une de ses extrémités, dite extrémité d'attache, munie d'un charnon destiné à fixer la branche à un tenon d'une monture de lunettes, l'élément charnière étant configuré pour exercer un effort de rappel maintenant, par défaut, emboitées la première et la deuxième face, et autorisant, une articulation du deuxième tronçon au regard du premier tronçon lorsqu'un effort est exercé sur le deuxième tronçon.

Le profil de la première face selon un plan de coupe perpendiculaire à l'axe charnière est configuré de manière à conserver l'emboitement de la première et de la deuxième face lorsqu'un effort est exercé sur le deuxième tronçon dans un plan perpendiculaire à l'axe charnière afin de plier la branche.

Le premier tronçon comprend une butée formée par une languette en projection par rapport à la première face et dans la continuité d'une face interne dudit premier tronçon, la face interne étant destinée à faire face à un cadre principal de la monture de lunettes lorsque la branche est repliée, la languette est configurée de manière à conserver l'emboitement de la première et de la deuxième face lorsqu'un effort est exercé sur ladite branche dans un plan perpendiculaire à l'axe charnière afin de la plier.

L' élément charnière comprend une tige qui s'étend de l'extrémité d'attache vers une extrémité, dite extrémité terminale, un ressort monté de manière coaxiale sur une section de la tige logée dans le deuxième logement, l'élément charnière comprend en outre agencées de part et d'autre du ressort, et dans l'ordre de l'extrémité d'attache vers l'extrémité terminale, une douille filetée et une douille de butée, la douille filetée et la douille de butée étant agencées pour maintenir le ressort en compression, la douille filetée est en liaison glissière avec la tige et est vissée dans le deuxième logement.

Selon un mode de mise en oeuvre, le profil est en forme de W.

Selon un mode de mise en œuvre, la douille de butée est soit sertie sur la tige soit maintenue en appui par le ressort contre une butée formée sur la tige.

Selon un mode de mise en œuvre, la douille filetée est en butée contre un crochet formé sur l'extrémité d'attache.

Selon un mode de mise en œuvre, l'élément charnière comprend en outre un insert de forme généralement plane lié au crochet et qui comprend un perçage formant le charnon.

L'invention concerne également un monture de lunettes comprenant deux branches selon la présente invention.

Selon un mode de mise en œuvre, chaque branche est fixée à un tenon de ladite monture.

Selon un mode de mise en œuvre, la face de montage est plane, chaque tenon comprend deux faces planes dites, respectivement, face dépliée et face pliée, la face de montage étant destinée à être en appui contre la face dépliée lorsque la branche est dépliée, et être en appui contre la face pliée lorsque la branche est pliée.

### BREVE DESCRIPTION DES DESSINS

D'autres caractéristiques et avantages de l'invention ressortiront de la description détaillée d'une branche d'une monture de lunettes qui va suivre en référence aux figures annexées sur lesquelles :
[Fig.1] La figure 1 est une représentation schématique, selon une vue en perspective, d'une branche montée sur une monture de lunettes selon la présente invention, la branche étant dans une position dépliée ;
[Fig.2] La figure 2 est une représentation schématique, selon une vue en perspective et en éclaté, d'une branche et d'un élément charnière susceptibles d'être mis en œuvre dans le cadre de la présente invention ;
[Fig.3] La figure 3 est une représentation schématique partielle, selon une vue en perspective, d'une branche susceptible d'être mise en œuvre dans le cadre de la présente invention, la figure 3 représente notamment l'extrémité d'attache de l'élément charnière débouchant par la face de montage ;
[Fig.4] La figure 4 illustre l'effet d'un effort (représenté par une flèche) exercé sur le deuxième tronçon selon un plan perpendiculaire à l'axe charnière en vue de déplier la branche ;
[Fig.5] La figure 5 illustre l'effet d'un effort (représenté par une flèche) exercé sur le deuxième tronçon selon une direction comprise dans un plan comprenant l'axe charnière et vers le haut ;
[Fig.6] La figure 6 illustre l'effet d'un effort (représenté par une flèche) exercé sur le deuxième tronçon selon une direction comprise dans un plan comprenant l'axe charnière et vers le bas ;
[Fig.7] La figure 7 illustre l'effet d'un effort (représenté par une flèche) exercé sur le deuxième tronçon selon un plan perpendiculaire à l'axe charnière en vue de plier la branche, le profil de la première face selon un plan de coupe perpendiculaire à l'axe charnière étant configuré de manière à conserver l'emboitement de la première et de la deuxième face lorsqu'un effort est exercé sur le deuxième tronçon dans un plan perpendiculaire à l'axe charnière afin de la plier ;
[Fig. 8] La figure 8 est une représentation schématique, selon une vue en perspective, d'un élément charnière particulier susceptible d'être mis en œuvre dans le cadre de la présente invention ;
[Fig. 9] La figure 9 est une représentation de l'élément charnière de la figure 8 en vue éclatée ;
[Fig. 10] La figure 10 est une représentation, par une surface latérale, du système de deux cames mis en œuvre dans le kit de réparation/montage ;
[Fig. 11] La figure 11 est une représentation du système à deux cames de la figure 10, et selon un plan de coupe passant par les perçages ;
[Fig. 12] La figure 12 est une représentation du système à deux cames par une face à partir de laquelle le perçage est formé ;
[Fig. 13] La figure 13 est une représentation d'un boîtier d'un kit de réparation/montage.

### DESCRIPTION DETAILLEE DE L'INVENTION

La présente invention concerne une branche destinée à être montée, par une face de montage, en liaison charnière (également connue sous le nom de « liaison pivot ») autour d'un axe charnière, à une face d'une monture de lunettes, de manière à pouvoir pivoter entre l'une et l'autre de deux positions stables dites, respectivement, position pliée et position dépliée.

En particulier, et selon la présente invention, la branche comprend à partir de son extrémité proximale vers une extrémité distale un premier tronçon et un deuxième tronçon.

Le premier tronçon est pourvu d'une première face opposée à la face de montage.

Le deuxième tronçon est en liaison rotule avec le premier tronçon. La première face et la deuxième face sont par ailleurs de formes complémentaires de manière à permettre l'emboitement de l'une dans l'autre.

La liaison charnière et la liaison rotule sont assurées par un élément charnière exerçant un effort de rappel. Ce dernier maintient, par défaut, emboitée l'une de la première et de la deuxième face dans l'autre de la première et de la deuxième face, et autorise une articulation du deuxième tronçon au regard du premier tronçon lorsqu'un effort est exercé sur le deuxième tronçon.

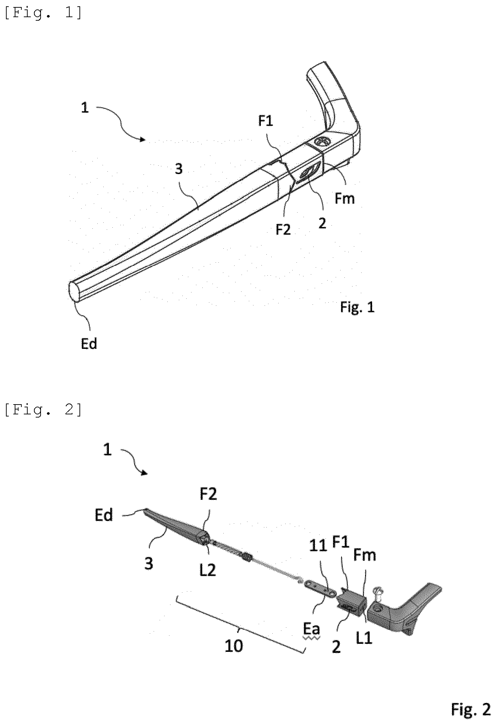

La figure 1 représente une branche 1 conforme aux principes de la présente invention.

La branche 1 est destinée à être montée par une face de montage Fm, en liaison charnière autour d'un axe charnière, à une face d'une monture de lunettes. Ce montage de la branche 1 sur la monture de lunette permet notamment une rotation de la branche 1 autour de l'axe charnière entre l'une d'une position pliée et d'une position dépliée (illustrée à la figure 1) vers l'autre de ces deux positions.

La branche 1 comprend à partir de sa face de montage Fm vers une extrémité distale Ed, un premier tronçon 2 et un deuxième tronçon 3.

En particulier, tel qu'illustré à la figure 2, le premier tronçon 2 s'étend de la face de montage Fm vers du première face F1, et comprend un logement, dit premier logement L1, débouchant par l'une et l'autre de ces deux faces. En d'autres termes, le premier logement L1 traverse le premier tronçon 2 de la première face vers la face de montage Fm. Le premier tronçon est avantageusement de forme généralement parallélépipédique.

Le deuxième tronçon 3 comprend un logement, dit deuxième logement L2, et qui débouche par la deuxième face F2. Le deuxième logement L2 peut présenter une forme longitudinale.

Par ailleurs, et selon la présente invention, la première face F1 et la deuxième face F2 sont de formes complémentaires. La complémentarité des formes précisée ci-avant permet l'emboitement de la première face et de la deuxième face. Par exemple, et sans toutefois limiter la présente invention à ce seul aspect, la première face F1 peut prendre une forme en creux.

Le premier tronçon 2 et le deuxième tronçon 3 peuvent comprendre un matériau plastique. Toutefois, l'homme du métier pourra, sur la base de ses connaissances générales, mettre en œuvre tout autre type de matériau susceptible de convenir.

La branche 1 est également pourvue d'un élément charnière 10 (dont un exemple est représenté en vue éclatée à la figure 2).

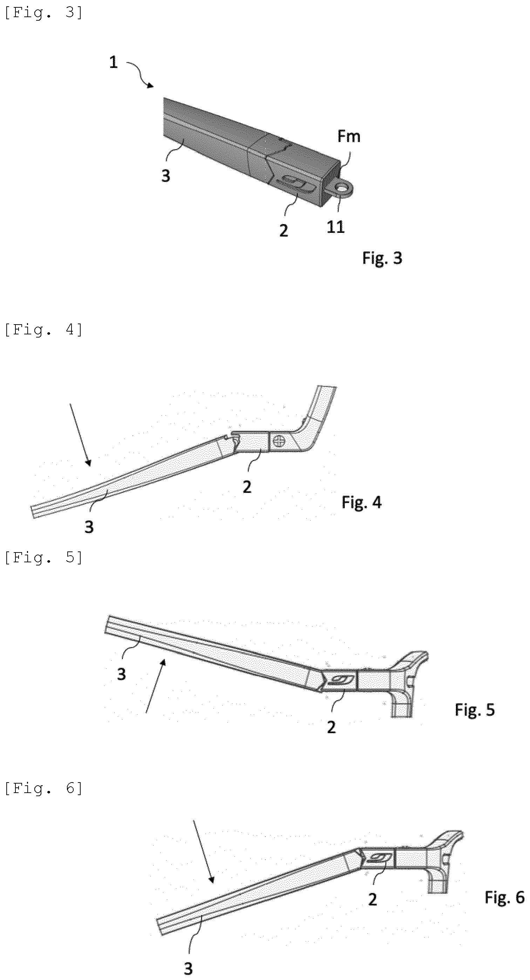

Cet élément charnière 10 est notamment fixé au deuxième tronçon dans le deuxième logement L2 et traverse le premier logement de la première face F1 vers la face de montage Fm. L'élément charnière 10 comprend par ailleurs une extrémité, dite extrémité d'attache Ea, munie d'un charnon 11 destiné à fixer la branche 1 à un tenon d'une monture de lunettes. Plus particulièrement, l'extrémité d'attache Ea débouche par la face de montage Fm (figure 3).

En d'autres termes, dès lors que le charnon 11 est fixé à un charnon d'un tenon d'une monture de lunettes, l'élément charnière 10 maintient solidaires, les uns des autres, le premier tronçon, le deuxième tronçon et la monture de lunettes.

Par ailleurs, l'élément charnière est configuré, lorsque le charnon 11 est fixé à un charnon d'un tenon d'une monture de lunettes, pour exercer un effet ressort (ou effort de rappel) maintenant, par défaut, emboitées la première et la deuxième face. En outre, le lien entre le premier tronçon et le deuxième tronçon exercé au moyen de l'élément charnière est donc une liaison rotule. En d'autres termes, l'élément charnière autorise la rotation du deuxième tronçon par rapport au premier tronçon selon les trois degrés de liberté d'une liaison rotule lorsqu'un effort est exercé sur le deuxième tronçon.

L'élément charnière 10, selon l'invention, comprend un ressort permettant de maintenir la première face et la deuxième face emboîtées l'une dans l'autre.

La figure 4, la figure 5 et la figure 6 illustrent différentes articulations en fonction d'un effort (dont la direction et le sens sont illustrés par une flèche) exercé sur le deuxième tronçon 3.

Notamment, à la figure 4, l'effort (illustré par une flèche) est exercé de manière à forcer le déploiement de la branche au-delà de sa position dépliée. Sous l'effet de cet effort, la branche fléchit au niveau de la liaison rotule. Ce fléchissement implique uniquement un mouvement du deuxième tronçon.

La figure 5 illustre l'effet d'un effort exercé sur le deuxième tronçon selon une direction comprise dans un plan comprenant l'axe charnière et vers le « haut ».

La figure 6 illustre l'effet d'un effort exercé sur le deuxième tronçon selon une direction comprise dans un plan comprenant l'axe charnière et vers le « bas ».

Dans ces deux exemples (figure 5 et figure 6), un fléchissement de la branche peut également être observé. Plus particulièrement, le deuxième tronçon s'articule autour de la liaison rotule selon le sens et la direction de l'effort exercé.

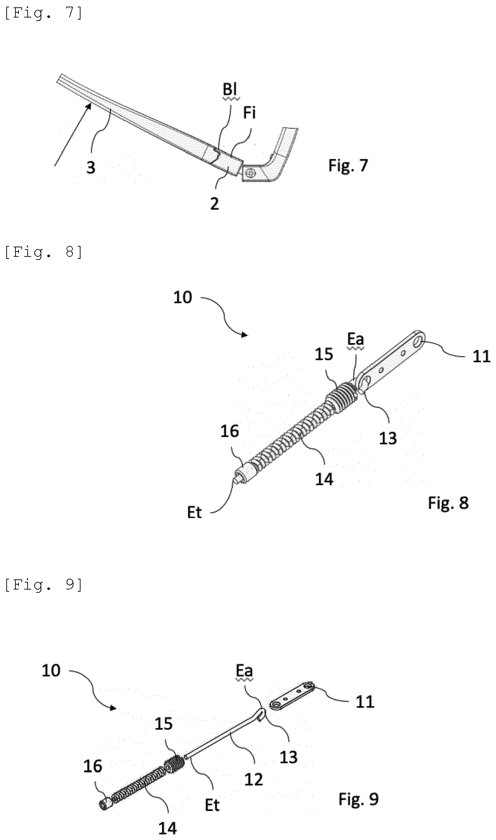

De manière avantageuse, la branche 1 peut être configurée pour prévenir toute articulation de ladite branche 1 au niveau de la liaison rotule dès lors qu'un effort destiné à faire pivoter ladite branche 1 de sa position dépliée vers sa position pliée est exercé sur le deuxième tronçon (figure 7).

Ainsi, selon l'invention, le profil de la première face selon un plan de coupe perpendiculaire à l'axe charnière est configuré de manière à conserver l'emboitement de la première et de la deuxième face lorsqu'un effort est exercé sur ladite branche dans un plan perpendiculaire à l'axe charnière afin de la plier.

Plus particulièrement, la première face comprend une butée formée par une languette Bl, dans la continuité d'une face interne Fi, du premier tronçon, de manière à conserver l'emboitement de la première et de la deuxième face lorsqu'un effort est exercé sur ladite branche dans un plan perpendiculaire à l'axe charnière afin de la plier.

Les dimensions de la languette Bl peuvent être déterminées en fonction de la force de rappel exercée par l'élément charnière 10.

Une face interne d'un premier tronçon d'une branche est notamment la face destiné à être en regard du cadre principal d'une paire de lunettes lorsque la branche portant ledit premier tronçon est repliée. Dit autrement, les faces internes de deux premiers tronçons de deux branches distinctes, dites première branche et deuxième branche, montées sur une monture de lunette, sont en regard l'une de l'autre lorsque la première et la deuxième branche sont en position dépliée.

De manière particulièrement avantageuse, le profil de la première face selon un plan de coupe perpendiculaire à l'axe charnière est en forme de W. La barre du W portée par la face interne du premier tronçon peut avantageusement former la languette.

Dans la suite de l'énoncé de la présente invention, un élément charnière 10 d'une configuration particulière est décrit. L'invention ne doit cependant pas être limitée à ce seul aspect.

La figure 8 représente de manière schématique cet élément charnière 10, tandis que la figure 9 représente ce dernier en vue éclatée.

L'élément charnière 10 comprend une tige 12 qui s'étend de l'extrémité d'attache Ea vers une extrémité, dite extrémité terminale Et.

La tige 12 peut comprendre un métal, et notamment comprendre de l'acier, du fer, de l'aluminium.

L'extrémité d'attache Ea de la tige 12 peut être formée par un crochet 13.

L'élément charnière 10 comprend un ressort 14 monté de manière coaxiale sur une section de la tige 12 logée dans le deuxième logement L2.

Ce ressort 14 est maintenu en compression par une douille filetée 15 et une douille de butée 16. Plus particulièrement, l'élément charnière 10 comprend en outre agencées de part et d'autre du ressort 14, et dans l'ordre de l'extrémité d'attache Ea vers l'extrémité terminale Et, la douille filetée 15, le ressort 14 et la douille de butée 16. La mise en œuvre de la douille de butée n'est pas strictement nécessaire et tout autre moyen de butée peut être considéré mais ne faisant pas partie de l'invention. Notamment, un écrasement, pour la formation d'excroissances, de la tige 12 au niveau de l'extrémité terminale peut jouer le rôle de butée du ressort 14.

La douille filetée 15 et la douille de butée 16 sont agencées pour maintenir le ressort 14 en compression.

La douille filetée 15 est en liaison glissière avec la tige 12 et est destinée à être vissée dans le deuxième logement L2.

La douille de butée 16 peut être soit sertie sur la tige 12 soit maintenue en appui par le ressort 14 contre une butée formée sur la tige. La butée formée sur la tige peut notamment être obtenue par pincement de cette dernière.

La douille filetée 15 peut être en butée contre le crochet 13 formé sur l'extrémité d'attache Ea.

L'élément charnière 10 peut comprendre en outre l'insert de forme généralement plane lié au crochet et qui comprend un perçage formant le charnon 11. Cette mise en œuvre d'un insert permet de conférer une meilleure flexibilité à l'élément charnière 10 au regard des systèmes connus de l'état de la technique.

Ainsi, et en fonctionnement, cet élément charnière 10 est fixé au deuxième tronçon 3 par vissage de la douille filetée 15 dans le deuxième logement L2. En d'autres termes, la section de l'élément charnière 10 portant la douille filetée 15, le ressort 14 et la douille de butée 16 se trouve logée dans le deuxième logement L2.

Une autre section de cet élément charnière 10 traverse le premier tronçon 2 de sorte que le charnon dudit élément débouche par la face de montage Fm. Ledit charnon est pour sa part fixé au charnon d'un tenon d'une monture de lunette.

Le ressort 14 est maintenu en compression de manière à exercer un effort de rappel entre le deuxième tronçon 3 et le charnon du tenon de la monture de lunettes. La premier tronçon 2 s'interpose donc entre le deuxième tronçon et le charnon du tenon de la monture de lunettes.

Un effort exercé sur le deuxième tronçon 3 impose donc à la douille filetée de glisser le long de la tige et en direction de la douille de butée 16. Ce mouvement impose une compression supplémentaire du ressort 14.

L'invention concerne également une monture de lunettes comprenant deux branches selon la présente invention.

Chaque branche peut être fixée à un tenon de ladite monture.

De manière avantageuse, la face de montage Fm est plane, et chaque tenon comprend deux faces planes dites, respectivement, face dépliée et face pliée, la face de montage étant destinée à être en appui contre la face dépliée lorsque la branche est dépliée, et être en appui contre la face pliée lorsque la branche est pliée.

Ce dernier aspect permet de conférer un caractère stable à la position pliée et la position dépliée d'une branche. En effet, l'arête formée entre la face pliée et la face dépliée induit un instabilité du pivotement de la branche de l'une de la position plié et de la position dépliée vers l'autre de ces deux positions. Plus particulièrement, si l'effort conduisant au pivotement de la branche est relâché avant que cette instabilité ne soit atteinte, la branche reprendra sa position initiale. A contrario, si l'effort conduisant au pivotement de la branche est relâché après avoir atteint cette instabilité, la branche terminera sa course et basculera dans la position visée.

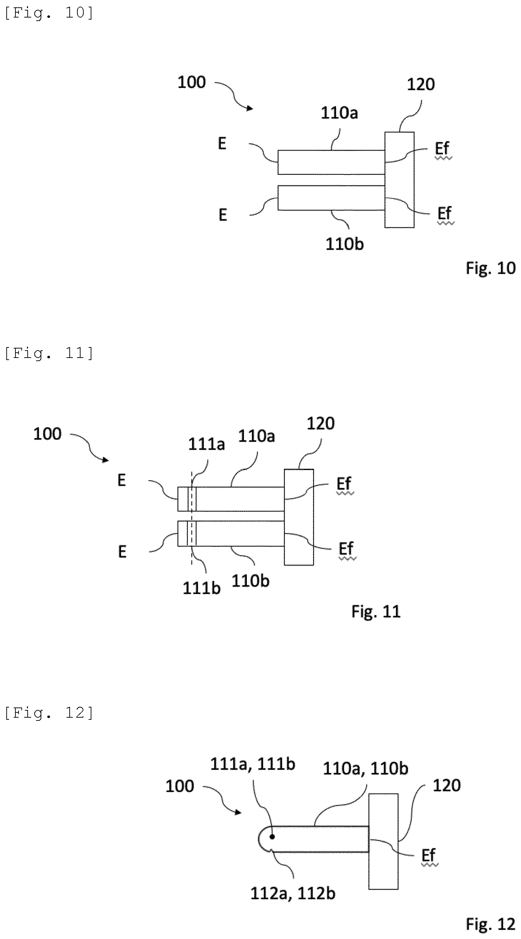

Il est aussi montré un kit de réparation/montage de l'élément charnière (figure 10, figure 11, et figure 12). Le kit comprend à cet égard un élément charnière 10. Notamment, l'élément charnière du kit de réparation reprend les termes de l'élément charnière décrit en relation avec les figures 8 et 9.

Le kit comprend également une goupille, une vis, ainsi qu'un élément de mise en tension. L'élément de mise en tension 100 comprend un système à deux cames 110a et 110b, essentiellement identiques, et fixées à un support 120 par une de leur extrémité, dite extrémité de fixation Ef. L'extrémité E de chacune des cames 110a et 110b, opposée à leur extrémité de fixation Ef, est arrondie et comprend un perçage 111a et 111b disposé sur le diamètre de l'extrémité arrondie. Notamment, chacun des perçages 111a et 111b est excentré par rapport au centre de l'extrémité arrondie de manière à assurer l'effet de came. Chaque came 110a et 110b comprend une encoche 112a, 112b formée sur le flanc latéral desdites cames. Les deux cames 110a et 110b, fixées sur le support 120, sont parallèles entres elles et agencées de sorte que les deux perçages 111a et 111b soient dans la continuité l'un de l'autre (en d'autres termes les deux axes de révolution des deux perçages sont confondus). Par ailleurs, les deux cames 110a et 110b sont espacées l'une de l'autre de manière à permettre le passage de l'insert.

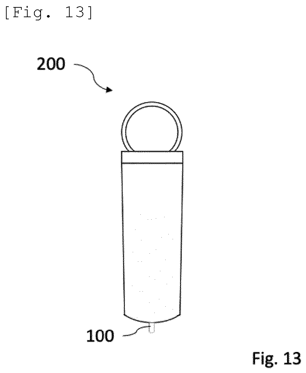

Le kit de réparation/montage peut comprendre un boitier 200 dont une paroi forme le support 120, et destiné à stocker la vis, la ou les goupilles et l'élément charnière (figure 13).

Bien sûr, l'invention n'est pas limitée aux modes de réalisation décrits et on peut y apporter des variantes de réalisation sans sortir du cadre de l'invention tel que défini par les revendications.

## Revendications

1. Branche (1) destinée à être montée par une de ses faces, dite face de montage (Fm), en liaison charnière autour d'un axe charnière, à une monture de lunettes, de manière à pouvoir pivoter entre une position plié et une position dépliée, la branche comprenant:
- un premier tronçon (2) pourvu d'un premier logement (L1) débouchant par la face de montage (Fm) et par une première face (F1) du premier tronçon (2) opposée à la face de montage (Fm) ;
- un deuxième tronçon (3) comprenant une deuxième face (F2) par laquelle débouche un deuxième logement (L2), la première et la deuxième face étant de formes complémentaires de manière à permettre leur emboitement ; la branche est également pourvue d'un élément charnière (10) fixé au deuxième tronçon (3) dans le deuxième logement (L2) et qui traverse le premier logement (L1) pour laisser déboucher une de ses extrémités, dite extrémité d'attache (Ea), munie d'un charnon destiné à fixer la branche à un tenon d'une monture de lunettes, l'élément charnière (10) étant configuré pour exercer un effort de rappel maintenant, par défaut, emboitées la première et la deuxième face, et autorisant, une articulation du deuxième tronçon (3) au regard du premier tronçon (2) lorsqu'un effort est exercé sur le deuxième tronçon (3),
le profil de la première face (F1) selon un plan de coupe perpendiculaire à l'axe charnière est configuré de manière à conserver l'emboitement de la première et de la deuxième face lorsqu'un effort est exercé sur le deuxième tronçon (3) dans un plan perpendiculaire à l'axe charnière afin de plier la branche,
le premier tronçon (2) comprend une butée (B1) formée par une languette en projection par rapport à la première face (F1) et dans la continuité d'une face interne (Fi) dudit premier tronçon (2), la face interne (Fi) étant destinée à faire face à un cadre principal de la monture de lunettes lorsque la branche est repliée, la languette est configurée de manière à conserver l'emboitement de la première et de la deuxième face (F2) lorsqu'un effort est exercé sur ladite branche dans un plan perpendiculaire à l'axe charnière afin de la plier, l'élément charnière (10) comprend une tige (12) qui s'étend de l'extrémité d'attache (Ea) vers une extrémité, dite extrémité terminale, un ressort (14) monté de manière coaxiale sur une section de la tige (12) logée dans le deuxième logement (L2), l'élément charnière (10) comprend en outre agencées de part et d'autre du ressort (14), et dans l'ordre de l'extrémité d'attache (Ea) vers l'extrémité terminale (Et), une douille filetée (15) et une douille de butée (16) du ressort (14), la douille filetée (15) et la douille de butée (16) étant agencées pour maintenir le ressort (14) en compression, la douille filetée (15) est en liaison glissière avec la tige (12) et est vissée dans le deuxième logement (L2).

2. Branche selon la revendication 1, dans laquelle le profil est en forme de W.

3. Branche selon la revendication 1 ou 2, dans laquelle la douille de butée (16) est soit sertie sur la tige (12) soit maintenue en appui par le ressort (14) contre une butée formée sur la tige (12).

4. Branche selon l'une des revendications 1 à 3, dans laquelle la douille filetée (15) est en butée contre un crochet (13) formé sur l'extrémité d'attache (Ea).

5. Branche selon la revendication 4, dans laquelle l'élément charnière (10) comprend en outre un insert de forme généralement plane lié au crochet (13) et qui comprend un perçage formant le charnon.

6. Monture de lunettes comprenant deux branches selon l'une des revendications 1 à 5.

7. Monture de lunettes selon la revendication 6, dans laquelle chaque branche est fixée à un tenon de ladite monture.

8. Monture de lunettes selon la revendication 7, dans laquelle la face de montage (Fm) est plane, chaque tenon comprend deux faces planes dites, respectivement, face dépliée et face pliée, la face de montage (Fm) étant destinée à être en appui contre la face dépliée lorsque la branche est dépliée, et être en appui contre la face pliée lorsque la branche est pliée.

## Patentansprüche

1. Bügel (1), der bestimmt ist, anhand einer seiner Seiten, bezeichnet als Montageseite (Fm), in Scharnierverbindung um eine Scharnierachse an einer Brillenfassung angebracht zu sein, so dass er zwischen einer eingeklappten und einer ausgeklappten Position schwenkbar ist, wobei der Bügel umfasst:
- einen ersten Abschnitt (2) mit einer ersten Aufnahme (L1), die durch die Montageseite (Fm) und durch eine erste Seite (F1) des ersten Abschnitts (2) ausmündet, die der Montageseite (Fm) gegenüberliegt;
- einen zweiten Abschnitt (3), der eine zweite Seite (F2) umfasst, durch die eine zweite Aufnahme (L2) ausmündet, wobei die erste und die zweite Seite komplementäre Formen sind, um ihr Ineinandergreifen zu ermöglichen; wobei der Bügel ebenfalls mit einem Scharnierelement (10) versehen ist, das am zweiten Abschnitt (3) in der zweiten Aufnahme (L2) befestigt ist und das die erste Aufnahme (L1) durchquert, um eines seiner Enden, bezeichnet als Befestigungsende (Ea), ausmünden zu lassen, das mit einem Scharnierteil versehen, das dazu bestimmt ist, den Bügel an einem Zapfen einer Brillenfassung zu befestigen, wobei das Scharnierelement (10) ausgelegt ist, um eine Rückstellkraft auszuüben, die standardmäßig die erste und die zweite Seite ineinandergegriffen hält, und eine Gelenkverbindung des zweiten Abschnitts (3) im Hinblick auf den ersten Abschnitt (2) gestattet, wenn eine Kraft auf den zweiten Abschnitt (3) ausgeübt wird, wobei das Profil der ersten Seite (F1) gemäß einer Schnittebene senkrecht zur Scharnierachse derart ausgelegt ist, dass das Ineinandergreifen der ersten und zweiten Seite erhalten bleibt, wenn eine Kraft auf den zweiten Abschnitt (3) in einer Ebene senkrecht zur Scharnierachse ausgeübt wird, um den Bügel einzuklappen, wobei der erste Abschnitt (2) einen Anschlag (BI) umfasst, der von einer Lasche in Projektion in Bezug auf die erste Seite (F1) und in der Kontinuität einer Innenseite (Fi) des ersten Abschnitts (2) gebildet wird, wobei die Innenseite (Fi) dazu bestimmt ist, einem Hauptrahmen der Brillenfassung zugewandt zu sein, wenn der Bügel eingeklappt ist, wobei die Lasche derart ausgelegt ist, dass das Ineinandergreifen der ersten und zweiten Seite (F2) erhalten bleibt, wenn eine Kraft auf den Bügel in einer Ebene senkrecht zur Scharnierachse ausgeübt wird, um ihn einzuklappen, wobei das Scharnierelement (10) einen Stab (12) umfasst, der sich vom Befestigungsende (Ea) zu einem Ende, bezeichnet als terminales Ende, erstreckt, wobei eine Feder (14) koaxial auf einem Bereich des Stabs (12) angebracht ist, der in der zweiten Aufnahme (L2) aufgenommen ist, wobei das Scharnierelement (10) ferner, an beiden Seiten der Feder (14) eingerichtet und in der Reihenfolge vom Befestigungsende (Ea) zum terminalen Ende (Et), eine Gewindehülse (15) und eine Anschlaghülse (16) der Feder (14) umfasst, wobei die Gewindehülse (15) und die Anschlaghülse (16) zum komprimierten Halten der Feder (14) eingerichtet sind, wobei die Gewindehülse (15) mit dem Stab (12) in Gleitverbindung ist und in die zweite Aufnahme (L2) eingeschraubt ist.

2. Bügel nach Anspruch 1, wobei das Profil W-förmig ist.

3. Bügel nach Anspruch 1 oder 2, wobei die Anschlaghülse (16) entweder auf den Stab (12) gepresst oder von der Feder (14) gegen einen auf dem Stab (12) gebildeten Anschlag in Anlage gehalten wird.

4. Bügel nach einem der Ansprüche 1 bis 3, wobei die Gewindehülse (15) an einem am Befestigungsende (Ea) ausgebildeten Haken (13) anliegt.

5. Bügel nach Anspruch 4, wobei das Scharnierelement (10) ferner einen im Allgemeinen flach geformten Einsatz umfasst, der mit dem Haken (13) verbunden ist und eine Bohrung umfasst, die die Scharnierhälfte bildet.

6. Brillenfassung, die zwei Bügel nach einem der Ansprüche 1 bis 5 umfasst.

7. Brillenfassung nach Anspruch 6, wobei jeder Bügel an einem Zapfen der Fassung befestigt ist.

8. Brillenfassung nach Anspruch 7, wobei die Montageseite (Fm) eben ist, wobei jeder Zapfen zwei ebene Seiten umfasst, bezeichnet jeweils als ausgeklappte Seite und als eingeklappte Seite, wobei die Montageseite (Fm) dazu bestimmt ist, an der ausgeklappten Seite anzuliegen, wenn der Bügel ausgeklappt ist, und an der eingeklappten Seite anzuliegen, wenn der Bügel eingeklappt ist.

## Claims

1. An arm (1) to be mounted by one of its faces, referred to as a mounting face (Fm), in a hinge connection about a hinge axis, to a frame of eyeglasses, so as to be able to pivot between a folded position and an unfolded position, the arm comprising:
- a first segment (2) provided with a first housing (L1) opening through the mounting face (Fm) and through a first face (F1) of the first segment (2) opposite to the mounting face (Fm);
- a second segment (3) comprising a second face (F2) through which a second housing (L2) opens, the first and the second face being of complementary shapes so as to allow them to be interlocked; the arm is also provided with a hinge element (10) fastened to the second segment (3) in the second housing (L2) and which passes through the first housing (L1) to leave one of its ends, referred to as an attachment end (Ea), to open, provided with a charnier for fastening the arm to an endpiece of a frame of eyeglasses, the hinge element (10) being configured to exert a spring force holding, by default, the first and second faces interlocked, and allowing articulation of the second segment (3) with respect to the first segment (2) when a force is exerted on the second segment (3), the profile of the first face (F1) in a cutaway plane perpendicular to the hinge axis is configured so as to retain interlocking of the first and the second face when a force is exerted on the second segment (3) in a plane perpendicular to the hinge axis in order to fold the arm, the first segment (2) comprises an abutment (B1) formed by a tab projecting with respect to the first face (F1) and in the continuity of an inner face (Fi) of said first segment (2), the inner face (Fi) being for facing a main framework of the frame of eyeglasses when the arm is folded back, the tab is configured so as to retain interlocking of the first and second faces (F2) when a force is exerted on said arm in a plane perpendicular to the hinge axis in order to fold it, the hinge element (10) comprises a rod (12) that extends from the attachment end (Ea) to an end, referred to as a terminal end, a spring (14) coaxially mounted to a section of the rod (12) housed in the second housing (L2), the hinge element (10) further comprises, being arranged on either side of the spring (14), and in the order from the attachment end (Ea) to the terminal end (Et), a threaded bushing (15) and an abutment bushing (16) for the spring (14), the threaded bushing (15) and the abutment bushing (16) being arranged to hold the spring (14) in compression, the threaded bush (15) is in slide connection with the rod (12) and is screwed into the second housing (L2).

2. The arm according to claim 1, wherein the profile is W-shaped.

3. The arm according to claim 1 or 2, wherein the abutment bushing (16) is either crimped onto the rod (12) or held by the spring (14) bearing against an abutment formed on the rod (12).

4. The arm according to one of claims 1 to 3, wherein the threaded bushing (15) abuts against a hook (13) formed on the attachment end (Ea).

5. The arm according to claim 4, wherein the hinge element (10) further comprises a generally planar-shaped insert connected to the hook (13) and which comprises an aperture forming the charnier.

6. A frame of eyeglasses comprising two arms according to one of claims 1 to 5.

7. The frame of eyeglasses according to claim 6, wherein each arm is fastened to an endpiece of said frame.

8. The frame of eyeglasses according to claim 7, wherein the mounting face (Fm) is planar, each endpiece comprises two planar faces, respectively referred to as the unfolded face and the folded face, the mounting face (Fm) being for bearing against the unfolded face when the arm is unfolded, and bearing against the folded face when the arm is folded.
